# FASCICULE DE BREVET EUROPEEN

(11) **EP 3 354 130 B1**
(45) Date de publication et mention de la délivrance du brevet: **04.05.2022**
(21) Numéro de dépôt: 18154033.7
(22) Date de dépôt: 30.01.2018
(51) Int. Cl.: A01K 1/01

(54) **DISPOSITIF DE NETTOYAGE DU SOL D'UN BÂTIMENT DE LOGEMENT DU BÉTAIL**
VORRICHTUNG ZUR BODENREINIGUNG EINES GEBÄUDES ZUR UNTERBRINGUNG VON NUTZTIEREN
DEVICE FOR CLEANING THE FLOOR OF A BUILDING FOR HOUSING LIVESTOCK

(30) Priorité: 31.01.2017 FR 1750770
(43) Date de publication de la demande: 01.08.2018
(73) Titulaire: Vermot Distribution, 25250 Rang (FR)
(72) Inventeur: VERMOT, Denis, 25340 Saint Georges-Armont (FR); VERMOT, Lionel, 25220 Amagney (FR); VERMOT, Mathieu, 25110 Baume les Dames (FR); VERMOT, Thibault, 25340 Saint Georges-Armont (FR)
(74) Mandataire: Cabinet Bleger-Rhein-Poupon

(56) Documents cités:
- EP-A1- 2 236 024
- US-A1- 2012 055 508

## Description

La présente invention concerne une installation de nettoyage du sol d'un bâtiment de logement du bétail.

L'invention concerne, encore, un bâtiment de logement du bétail comportant une telle installation de nettoyage.

L'invention concerne le domaine de la fabrication des dispositifs permettant d'assurer, de manière automatique, le nettoyage du sol d'un bâtiment de logement du bétail comme une étable, une écurie, une bergerie, une chèvrerie, une porcherie ou autre.

On observera que le sol d'un tel bâtiment est, usuellement, réalisé en béton et comporte des rainures permettant de rendre la surface de ce sol moins glissant pour le bétail.

La fréquentation du bâtiment par ce bétail se traduit par un dépôt, sur le sol de ce bâtiment, d'une couche de lisier qu'il convient de nettoyer pour des raisons de sécurité et d'hygiène.

L'on connait, d'ores et déjà, des dispositifs permettant d'assurer un tel nettoyage et comportant au moins un racleur configuré pour prendre appui sur le sol et pour se déplacer par rapport à ce sol, ceci pour entraîner ou repousser le lisier en direction d'une zone de collecte ou d'évacuation de ce lisier.

A ce propos, on observera qu'un tel racleur permet de nettoyer correctement la surface supérieure du sol mais que du lisier a tout de même tendance à stagner à l'intérieur des rainures.

Une solution consiste, alors, à répandre, sur le sol, de la paille qui a pour effet d'éponger au moins en partie le lisier qui stagne dans les rainures.

Cependant, en l'absence de paille ou d'une quantité suffisante de paille, les rainures contiennent du lisier qui **constitue, d'une part, une source d'humidité néfaste aux onglons et, d'autre part, un réservoir de germes pour le bétail qui est susceptible contacter des maladies comme la dermatite digitée.** A titre d'exemple on connaît du document EP2236024 une installation de nettoyage selon la préambule de la revendication 1, et du US2012055508 un dispositif autonome de nettoyage du sol d'un bâtiment de logement de bétail.

**La présente invention de veut de remédier aux inconvénients des dispositifs de nettoyage de l'état de la technique.**

**A cet effet, l'invention concerne** une installation selon la revendication 1.

Selon une autre caractéristique, le ou les moyens de réglage comportent, chacun, des moyens pour régler la position du balai d'un tel ensemble par rapport au racleur d'un tel ensemble, ceci selon une direction perpendiculaire à une surface de raclage que présente un tel racleur, et qui est configurée pour prendre appui sur le sol en vue de son raclage.

Une caractéristique additionnelle concerne le fait que le ou les moyens de réglage comportent, chacun, d'une part, la vis du ou des moyens de fixation qui est mobile en rotation par rapport au support de ce ou ces moyens de fixation, d'autre part, l'orifice taraudé que comporte le balai et qui coopère avec ladite vis et, d'autre part encore, des moyens d'immobilisation pour immobiliser en translation la vis par rapport au support.

Encore une autre caractéristique consiste en ce que le balai du ou des ensembles comporte des poils réalisés en nylon et/ou regroupés par bouquets de poils et/ou présentant une longueur comprise entre 80mm et 120mm et/ou présentant un diamètre compris entre 1 et 1,4 millimètres.

Une caractéristique additionnelle concerne le fait que le balai comporte, d'une part, au moins une brosse et, d'autre part, une glissière recevant, intérieurement, ladite brosse ou lesdites brosses.

Finalement, l'invention concerne un bâtiment de logement du bétail comportant, d'une part, un sol comportant au moins une rainure et, d'autre part, une installation de nettoyage de ce sol de ce bâtiment de logement de bétail. Ce bâtiment est caractérisé par le fait que l'installation de nettoyage du sol présente les caractéristiques décrites ci-dessus et que la chaîne du moyen d'entraînement en déplacement du dispositif de nettoyage de cette installation de nettoyage est logée dans la rainure ou dans une des rainures du sol du bâtiment de logement du bétail.

Ainsi, l'installation de nettoyage du sol comporte au moins un ensemble comportant, chacun, un racleur, un balai, et au moins un moyen de fixation d'un tel balai sur un tel racleur.

La présence d'un tel balai permet de nettoyer le sol d'un bâtiment de manière plus efficace qu'en mettant en œuvre un dispositif de nettoyage de l'état de la technique.

La présence d'un tel balai permet, donc, de diminuer la fréquence de nettoyage du sol et, par conséquent, de minimiser les désagréments d'un tel nettoyage pour le bétail.

De plus, la présence d'un tel balai permet, avantageusement, d'extraire hors des rainures la majeure partie du lisier contenu dans ces rainures. Il en découle une amélioration de la propreté du sol et une diminution de l'humidité ce qui a pour effet d'améliorer les conditions sanitaire et d'hygiène pour le bétail.

Une autre caractéristique consiste en ce que le ou les ensembles comportent, chacun, au moins un moyen de réglage pour régler, selon une direction verticale, la position du balai d'un tel ensemble par rapport au racleur d'un tel ensemble.

La présence de ces moyens de réglage permet de régler, selon une direction verticale et/ou perpendiculaire au sol, la position de ce balai par rapport au racleur ce qui permet, avantageusement, de déplacer un tel balai par rapport à un tel racleur pour compenser l'usure de ce balai et faire en sorte que ce balai continue de balayer le sol de manière appropriée. En fait, en procédant à un tel réglage, on procède, plus particulièrement, à un réglage de la hauteur de ce balai par rapport au racleur. De manière avantageuse, ces moyens de réglage permettent le réglage de la position du balai, d'une part, de manière rapide et aisée et, d'autre part, sans qu'il soit nécessaire de démonter le balai ou le racleur et/ou de recourir à un outillage spécifique.

Un autre avantage consiste en ce que les moyens de fixation et les moyens de réglage sont dépourvus de pièce proéminente ce qui permet, avantageusement, de préserver le bétail et de ne pas lui infliger de blessures.

Encore une autre caractéristique consiste en ce que le balai d'un ensemble comporte des poils réalisés en nylon. Cette caractéristique permet, avantageusement, de proposer un dispositif dont les poils sont particulièrement résistants, notamment à l'abrasion provoquée par un sol en béton.

Une caractéristique additionnelle consiste en ce que le balai comporte, d'une part, au moins une brosse et, d'autre part, une glissière recevant, intérieurement, ladite brosse ou lesdites brosses. Une telle caractéristique permet et en cas d'usure ou de dégradation (notamment prononcée) d'un tel balai de procéder aisément à son remplacement, plus particulièrement en remplaçant aisément une ou plusieurs brosses d'un tel balai.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

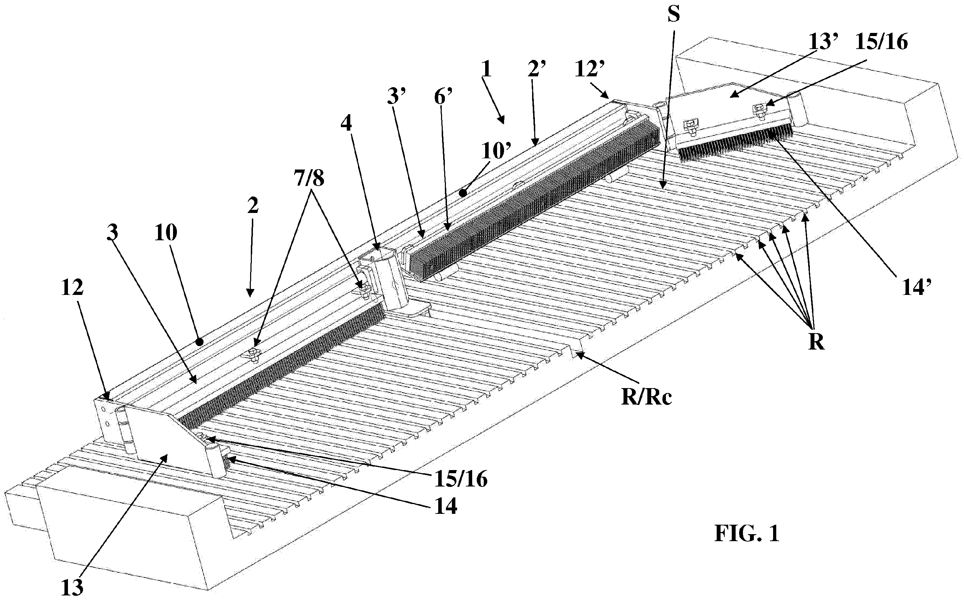

- la figure 1 est une vue schématisée et en perspective d'un dispositif de nettoyage conforme à l'invention ;

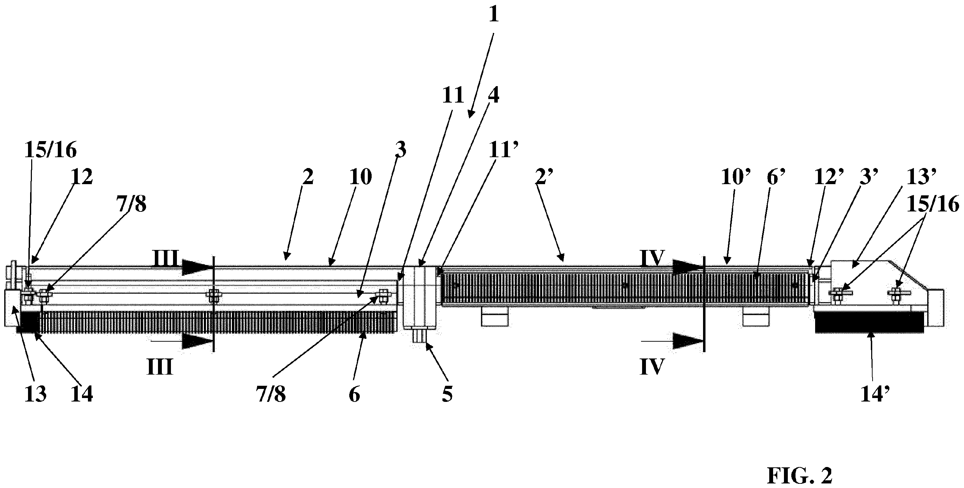

- la figure 2 est une vue schématisée et de face du dispositif illustré figure 1 ;
- la figure 3 est une vue schématisée, partielle et en coupe selon III-III d'un ensemble que comporte le dispositif illustré figure 2, ceci en position active de nettoyage d'un tel ensemble ;
- la figure 4 est une vue schématisée, partielle et en coupe selon IV-IV d'un ensemble que comporte le dispositif illustré figure 2, ceci en position inactive de nettoyage.

La présente invention concerne le domaine de la fabrication des dispositifs permettant d'assurer, de manière automatique, le nettoyage du sol d'un bâtiment de logement du bétail.

Le sol S d'un tel bâtiment est, usuellement, réalisé en béton ou analogue. Ce sol S présente au moins une rainure R ou (et de préférence) une pluralité de rainures R s'étendant de manière longitudinale et parallèle entre elles.

Dans le cadre de l'exploitation d'un tel bâtiment, le bétail se déplace et se tient sur ce sol S, notamment pour s'alimenter. C'est, en particulier, sur ce sol S que se dépose le lisier qui s'écoule, alors en particulier, à l'intérieur des rainures R.

L'invention concerne, alors, une installation de nettoyage 1 du sol S d'un tel bâtiment de logement du bétail. Cette installation de nettoyage 1 comporte un dispositif de nettoyage comprenant un ou plusieurs ensembles (2 ; 2') comportant, chacun, un racleur (3 ; 3') configuré pour prendre appui sur le sol S, ceci en vue du raclage de ce sol S.

Tel que visible sur les figures en annexe, ce dispositif de nettoyage 1 comporte, de préférence, deux ensembles (2 ; 2') ainsi qu'un noyau central 4 à partir duquel s'étendent ces deux ensembles (2 ; 2'), ceci de part et d'autre de ce noyau central 4, plus particulièrement de manière sensiblement symétrique par rapport à ce noyau central 4.

Ce dispositif de nettoyage 1 comporte, encore, un coulisseau 5 conçu pour coulisser à l'intérieur de l'une des rainures R mentionnées ci-dessus et que comporte le sol S, ceci en vue du guidage du dispositif de nettoyage 1 par rapport au sol S.

A ce propos, on observera que c'est, notamment, le noyau central 4 qui comporte un tel coulisseau 5 et/ou qu'un tel coulisseau 5 coulisse à l'intérieur d'une rainure centrale Rc, que comportent les rainures R mentionnées ci-dessus, et qui présente une profondeur accrue par rapport aux autres rainures R du sol S.

Selon l'invention, le ou les ensembles (2 ; 2') comportent, encore, chacun, d'une part, un balai (6 ; 6') configuré pour prendre appui sur le sol S en vue de son balayage et, d'autre part, au moins un moyen de fixation 7 pour fixer le balai (6 ; 6') d'un tel ensemble (2 ; 2') sur le racleur (3 ; 3') d'un tel ensemble (2 ; 2').

Tel que visible sur les figures en annexe, le ou les moyens de fixation 7 comportent, chacun, d'une part, un support 70 équipant le racleur (3 ; 3'), d'autre part, une vis 71 coopérant avec un tel support 70 ainsi qu'avec le balai (6 ; 6').

En fait, on observera qu'un tel racleur (3 ; 3') s'étend sensiblement selon un plan tandis que le support 70 s'étend à partir d'un tel racleur (3 ; 3'), latéralement par rapport à un tel racleur (3 ; 3'), et, de préférence, perpendiculairement par rapport au plan selon lequel s'étend un tel racleur (3 ; 3').

Tel que visible sur les figures en annexe, le support 70 adopte la forme d'une patte de fixation, rendue solidaire (notamment par soudure) du racleur (3 ; 3') et comportant un orifice traversant traversé par la vis 71 du moyen de fixation 7.

De manière particulière, un tel support 70 est constitué par une patte de fixation, réalisée en un matériau métallique galvanisé, et soudée sur le racleur (3 ; 3').

Selon un premier mode de réalisation non représenté, le balai (6 ; 6') est équipé avec ladite vis 71 du moyen de fixation 7 qui comporte une tête rendue solidaire de ce balai (6 ; 6'), notamment par soudure. Cette vis 71 traverse alors le support 70 et reçoit, de l'autre côté du support 70 par rapport à la tête de cette vis 71, au moins un écrou que comporte, alors encore, le moyen de fixation 7.

Cependant et selon un autre mode de réalisation illustré sur les figures en annexe, le ou les moyens de fixation 7 comportent, encore chacun, au moins un orifice taraudé 72, que comporte le balai (6 ; 6'), et avec lequel ou lesquels coopèrent la ou les vis 71 du ou des moyens de fixation 7. Là encore, une telle vis 71 traverse le support 70 en sorte que la tête de cette vis 71 se situe d'un côté de ce support 70 tandis que la tige filetée de cette vis 71 coopère avec l'orifice taraudé 72 du balai (6 ; 6') situé de l'autre côté de ce support 71.

Une autre caractéristique de l'installation de nettoyage 1 selon l'invention concerne le fait que le ou les ensembles (2 ; 2') comportent, encore, chacun, au moins un moyen de réglage 8 pour régler, selon une direction verticale, la position du balai (6 ; 6') d'un tel ensemble (2 ; 2') par rapport au racleur (3 ; 3') d'un tel ensemble (2 ; 2').

Tel que mentionné ci-dessus, le racleur (3 ; 3') s'étend selon un plan. Le ou les moyens de réglage 8 sont, alors, configurés pour régler la position du balai (6 ; 6') par rapport à un tel racleur (3 ; 3'), ceci selon une direction parallèle au plan selon lequel s'étend un tel racleur (3 ; 3').

On observera qu'un tel racleur (3 ; 3') comporte une surface de raclage 32 ou une ligne de raclage qui est configurée pour prendre appui sur le sol S en vue de son raclage. Ceci étant, le ou les moyens de réglage 8 mentionnés ci-dessus, comportent, alors, chacun, des moyens de réglage pour régler la position du balai (6 ; 6') d'un tel ensemble (2 ; 2') par rapport au racleur (3 ; 3') d'un tel ensemble (2 ; 2'), ceci selon une direction perpendiculaire à la surface de raclage 32 ou à la ligne de raclage d'un tel racleur (3 ; 3').

Tel que mentionné ci-dessus, le ou les ensembles (2 ; 2') comportent, chacun, un ou plusieurs moyens de fixation 7 comportant, chacun, une vis 71 ainsi qu'un orifice taraudé 72, que comporte le balai (6 ; 6') d'un tel ensemble (2 ; 2'), et qui coopère avec une telle vis 71. Le ou les moyens de réglage 8 comportent, alors chacun, d'une part, la vis 71 du ou des moyens de fixation 7 qui est mobile en rotation par rapport au support 70 de ce ou ces moyens de fixation 7, d'autre part, l'orifice taraudé 72 du ou des moyens de fixation 7, que comporte le balai (6 ; 6'), et qui coopère avec la vis 71 et, d'autre part encore, des moyens d'immobilisation 9 pour immobiliser en translation la vis 71 par rapport au support 70.

Selon un mode de réalisation préféré de l'invention, ces moyens d'immobilisation 9 en translation comportent une paire d'écrous (90 ; 91) juxtaposés et vissés sur la tige filetée de la vis 71. Une telle paire d'écrous (90 ; 91) est, de préférence, constituée par un écrou 90 et un contre-écrou 91.

De plus, cette paire d'écrous (90 ; 91) est agencée en sorte que le support 70 soit interposé entre cette paire d'écrous (90 ; 91) et la tête de la vis 71.

On observera que ces moyens d'immobilisation 9 en translation sont conçus pour assurer une immobilisation en translation réversible de la vis 71 par rapport au support 70. Ainsi, en dévissant le contre-écrou 91 par rapport à l'écrou 90 et cet écrou 90 lui-même, il est possible d'assurer le déplacement en translation de la vis 71 par rapport au support 70. Un tel déplacement en translation permet de retirer ladite vis 71 hors du balai (6 ; 6') et, ainsi, de libérer ce balai (6 ; 6') par rapport au racleur (3 ; 3'), ceci sans avoir à relever ce racleur (3 ; 3') ou tout en maintenant un tel racleur (3 ; 3') dans une position active de raclage. Un tel déplacement en translation est, en particulier, assuré dans le cadre d'une intervention de réparation ou d'entretien du dispositif de nettoyage 1, notamment pour remplacer un balai (6 ; 6').

Une autre caractéristique consiste en ce que le ou les ensembles (2 ; 2') comportent, encore, chacun, des moyens d'immobilisation en rotation de la vis 71 par rapport au support 70 et/ou au balai (6 ; 6'). De tels moyens d'immobilisation en rotation sont constitués par l'orifice taraudé 72, que comporte le balai (6 ; 6'), et qui coopère avec ladite vis 71, ceci à la manière d'un écrou frein. Une telle caractéristique permet, avantageusement, d'éviter d'ajouter un contre-écrou ou un autre système pour bloquer ladite vis 71 en rotation.

Une autre caractéristique de l'invention consiste en ce que le balai (6 ; 6') du ou des ensembles (2 ; 2') comporte des poils réalisés en matière plastique, plus particulièrement en polyamide, de préférence en nylon.

De manière alternative ou (et de préférence) additionnelle, ces poils présentent une longueur comprise entre 80mm et 120mm, de préférence de l'ordre de 100mm et/ou un diamètre compris entre 1 et 1,4 millimètres, de préférence de l'ordre de 1,2 millimètres.

De manière alternative ou (et de préférence) additionnelle, ces poils sont regroupés par bouquets de poils.

Ces bouquets de poils incorporent, chacun, entre 8 et 12 poils, de préférence de l'ordre de 10 poils.

Une autre caractéristique consiste en ce que ces bouquets de poils sont agencés par rangées de bouquets de poils. A ce propos, on observera que le balai (6 ; 6') comporte entre 6 et 10 rangées de bouquets de poils sur la largeur du balai (6 ; 6'), de préférence de l'ordre de 8 rangées de poils.

Encore une autre caractéristique concerne le fait que les bouquets de poils de deux rangées adjacentes de bouquets de poils sont agencés en quinconce.

De manière particulière, les bouquets de poils sont agencés en sorte que l'entraxe entre deux bouquets de poils est compris entre 10mm et 14mm, de préférence de l'ordre de 12mm.

Le balai (6 ; 6') présente une densité de poils comprise entre 130.000 et 200.000 poils par mètre carré (m²), de préférence comprise entre 150.000 et 180.000 poils par mètre carré, notamment de l'ordre de 160.000 à 170.000 poils par mètre carré.

De manière alternative ou (et de préférence) additionnelle, un tel balai (6 ; 6') présente une répartition comprise entre 9.000 et 13.000 poils par mètre linéaire, de préférence de l'ordre de 11.000 poils par mètre linéaire, ceci pour une implantation des poils sur une largeur comprise entre 5,5 et 8 centimètres, de préférence comprise entre 6,5 et 7 centimètres.

On observera qu'un tel positionnement en quinconce des bouquets de poils et qu'une telle densité de poils (plus particulièrement une répartition telle que susmentionnée) permettent au balai (6 ; 6') d'assurer une étanchéité dans le nettoyage. Ces caractéristiques permettent, alors avantageusement, de repousser tout le liquide accumulé dans les rainures et d'évacuer au maximum l'humidité présente au niveau du sol S.

Encore une autre caractéristique consiste en ce que le balai (6 ; 6') comporte une monture réalisée en matériau plastique, plus particulièrement en polyéthylène haute densité (PEHD). C'est, plus particulièrement, dans une telle monture qu'est noyée une des extrémités des poils du balai (6 ; 6'). De manière alternative, les extrémités des poils de ce balai (6 ; 6') sont, d'une part, positionnées à l'intérieur d'une pluralité d'orifices que comporte une telle monture, et, d'autre part, immobilisées à l'intérieur de tels orifices, notamment par collage.

Encore une autre caractéristique consiste en ce que le balai (6 ; 6') du ou des ensembles (2 ; 2') comporte, d'une part, au moins une brosse 60 et, d'autre part, une glissière 61 recevant, intérieurement, ladite brosse 60 ou lesdites brosses 60.

Une autre caractéristique consiste en ce que c'est, plus particulièrement, une telle brosse 60 d'un tel balai (6 ; 6') qui comporte, alors, la monture et les poils mentionnés ci-dessus.

Un mode de réalisation particulier consiste en ce que le balai (6 ; 6') du ou des ensembles (2 ; 2') comporte, d'une part, une pluralité de brosses 60 et, d'autre part, une glissière 61 recevant, intérieurement et en enfilade, ces brosses 60, plus particulièrement les montures de ces brosses 60. Un tel mode de réalisation permet, avantageusement, d'intégrer une pluralité de brosses 60 à l'intérieur d'une même glissière 61, ceci pour réaliser un balai (6 ; 6') de grande longueur (typiquement d'une longueur de 3 à 4 mètres voire plus).

Encore une autre caractéristique consiste en ce que la glissière 61 est réalisée en un matériau rigide, notamment en acier. Une telle caractéristique permet, avantageusement, de conférer une rigidité importante au balai (6 ; 6') d'un tel ensemble (2 ; 2'). Un mode préféré de réalisation consiste en ce qu'une telle glissière 61 adopte la forme d'une tôle pliée en acier galvanisé.

En fait, une telle brosse 60 est montée à l'intérieur d'une telle glissière 61, ceci en sorte de pouvoir en être extraite si nécessaire par coulissement, notamment en vue de son remplacement. Une telle brosse 60 est immobilisée à l'intérieur de ladite glissière 61, plus particulièrement par l'intermédiaire de la vis 71 du ou des moyens de fixation 7.

Une autre caractéristique consiste en ce que ce sont la glissière 61 et/ou la ou les brosses 60 d'un tel balai (6 ; 6') qui comportent, alors, l'orifice taraudé 72 du ou des moyens de fixation 7 et/ou du ou des moyens de réglage 8.

Un mode préféré de réalisation consiste en ce que ce sont au moins la ou les brosses 60 d'un tel balai (6 ; 6') qui comportent un tel orifice taraudé 72. En fait, c'est, plus particulièrement, la monture d'une telle brosse 60 qui comporte, alors, un tel orifice taraudé 72. Tel que mentionné ci-dessus, cette monture peut être réalisée en polyéthylène haute densité (PEHD). A ce propos, on observera que c'est, plus particulièrement, la réalisation d'un tel orifice taraudé 72 dans un tel matériau (PEHD) qui permet, alors avantageusement, à cet orifice taraudé 72 de définir les moyens d'immobilisation en rotation de la vis 71 mentionnés ci-dessus.

Tel que mentionné ci-dessus, le ou les ensembles (2 ; 2') comportent un racleur (3 ; 3'). Un tel racleur (3 ; 3') comporte, d'une part, un corps 30 de racleur (3 ; 3') et, d'autre part, une lame 31 de racleur (3 ; 3'), fixée sur le corps 30 de racleur (3 ; 3'), et conçue pour prendre appui sur le sol S, plus particulièrement au travers de la surface de raclage 32 ou de la ligne de raclage susmentionnées. Une telle lame 31 de racleur (3 ; 3') est réalisée en un matériau plastique et/ou est amovible, ceci pour permettre son remplacement.

Encore une autre caractéristique consiste en ce que le ou les ensembles (2 ; 2') comportent, encore, chacun, une poutre (10 ; 10') ainsi que des moyens de montage (11 ; 11') pour monter le racleur (3 ; 3') d'un tel ensemble (2 ; 2') sur la poutre (10 ; 10') d'un tel ensemble (2 ; 2'), ceci de manière mobile en pivotement et/ou en coulissement par rapport à la poutre (10 ; 10').

En fait, ces moyens de montage (11 ; 11') sont, plus particulièrement, conçus pour monter le corps 30 d'un tel racleur (3 ; 3') sur la poutre (10 ; 10') d'un tel ensemble (2 ; 2'), ceci de manière mobile en pivotement et/ou en coulissement par rapport à la poutre (10 ; 10').

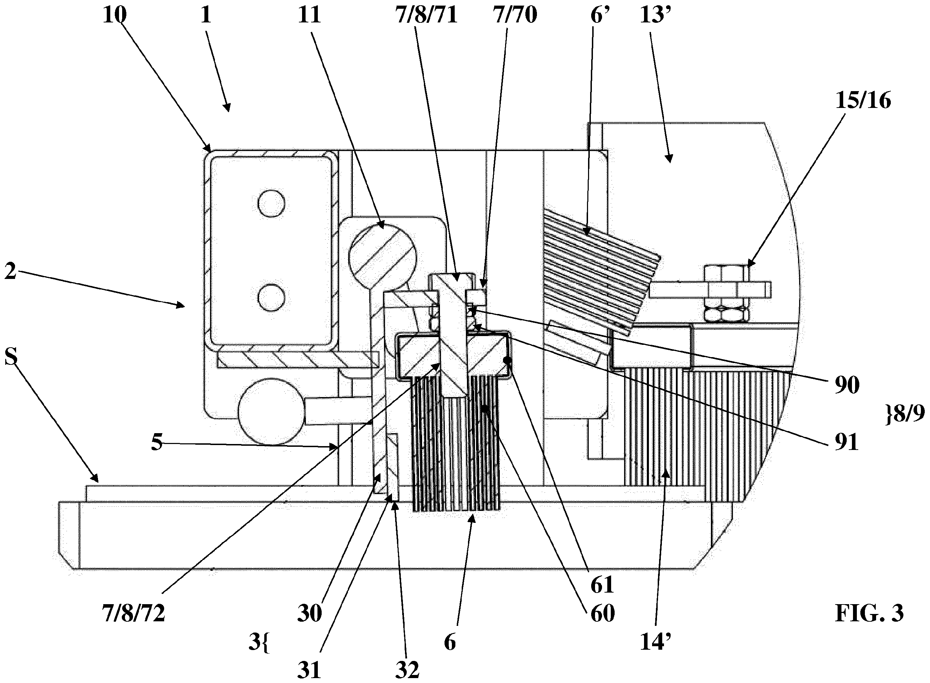

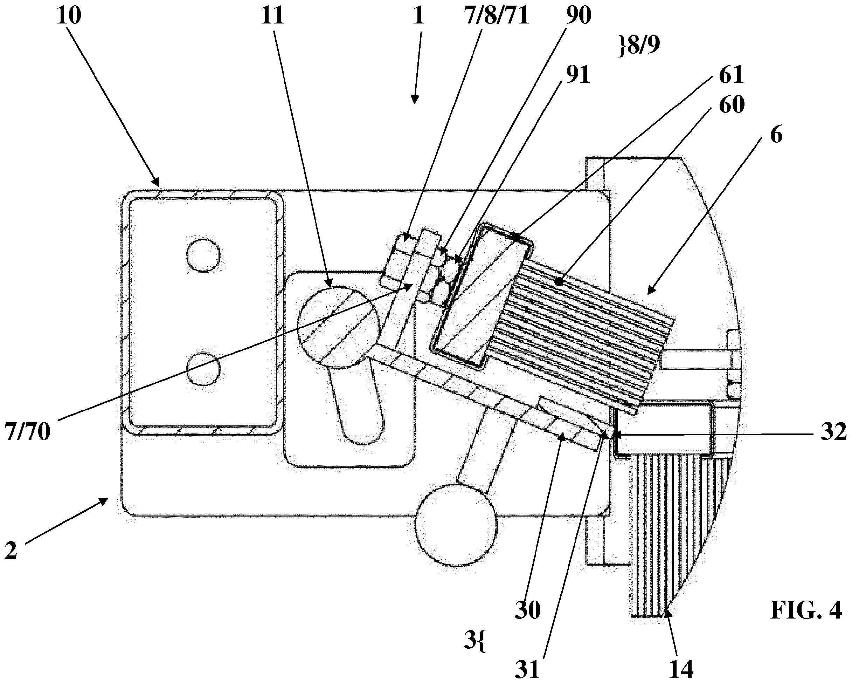

Un tel montage en pivotement et/ou en coulissement permet, avantageusement, d'une part, d'abaisser le racleur (3 ; 3') et, donc, le balai (6 ; 6') d'un tel ensemble (2 ; 2'), ceci en position active de nettoyage (figure 3) et pour un déplacement en marche avant du dispositif de nettoyage 1 et, d'autre part, de relever le racleur (3 ; 3') et, donc, le balai (6 ; 6') d'un tel ensemble (2 ; 2'), ceci en position inactive de nettoyage (figure 4) et pour un déplacement en marche arrière du dispositif de nettoyage 1.

Tel que visible sur les figures en annexe, le ou les ensembles (2 ; 2'), chacun, d'une part, présentent une extrémité distale (12 ; 12'), d'autre part, comportent un volet (13 ; 13') monté en pivotement (selon un axe sensiblement vertical) par rapport à l'extrémité distale (12 ; 12') d'un tel ensemble (2 ; 2'), et, d'autre part encore, comportent une balayette (14 ; 14') ainsi qu'au moins un moyen de fixation 15 pour fixer cette balayette (14 ; 14') sur ce volet (13 ; 13').

A l'instar du balai (6 ; 6') mentionné ci-dessus, une telle balayette (14 ; 14') est configurée pour prendre appui sur le sol S en vue de son balayage et/ou présente les caractéristiques d'un tel balai (6 ; 6').

De plus, le ou les moyens de fixation 15 peuvent présenter les mêmes caractéristiques que le ou les moyens de fixation 7 du balai (6 ; 6') sur le racleur (3 ; 3'). En particulier, un tel moyen de fixation 15 peut comporter, d'une part, un support (notamment sous la forme d'une patte de fixation), rendu solidaire (notamment par soudure) du volet (13 ; 13'), et comportant un orifice traversant et, d'autre part, une vis, équipant la balayette (14 ; 14') et traversant ledit orifice traversant du support, voire encore un orifice taraudé que comporte la balayette (14 ; 14').

De manière additionnelle, le ou les ensembles (2 ; 2') comportent, encore, chacun, au moins un moyen de réglage 16 pour régler la position, selon une direction verticale, d'une telle balayette (14 ; 14') par rapport au volet (13 ; 13') d'un tel ensemble (2 ; 2').

Là encore, un tel moyen de réglage 16 peut présenter les mêmes caractéristiques que le ou les moyens de réglage 8 de la position du balai (6 ; 6') par rapport au racleur (3 ; 3'). En particulier, un tel moyen de réglage 16 peut comporter, d'une part, un support (plus particulièrement le support du moyen de fixation 15), rendu solidaire (notamment par soudure) du volet (13 ; 13'), et comportant un orifice traversant (plus particulièrement l'orifice traversant du support du moyen de fixation 15) et, d'autre part, une vis (plus particulièrement la vis du moyen de fixation 15), équipant la balayette (14 ; 14') et traversant ledit orifice traversant du support, voire encore un orifice taraudé (plus particulièrement l'orifice taraudé du moyen de fixation 15) que comporte la balayette (14 ; 14') et, d'autre part, encore, des moyens d'immobilisation pour immobiliser en translation la vis par rapport au support (de tels moyens d'immobilisation adoptant, notamment, la forme d'une paire d'écrous).

L'invention concerne, également, une installation de nettoyage du sol S d'un bâtiment de logement du bétail. Cette installation comporte, d'une part, au moins un dispositif de nettoyage 1 du sol S de ce bâtiment et, d'autre part, au moins un moyen d'entraînement en déplacement (non représenté) de ce ou de ces dispositifs de nettoyage 1 par rapport au sol S.

En fait, dans cette installation de nettoyage, le ou les dispositifs de nettoyage 1 présentent les caractéristiques décrites ci-dessus.

De plus, dans cette installation de nettoyage, le ou les moyens d'entraînement en déplacement comportent, chacun, d'une part, une chaîne (ou analogue), qui est configurée pour être logée dans la rainure R ou dans une des rainures R (plus particulièrement dans la rainure centrale Rc) que comporte le sol S du bâtiment, et qui est raccordée à un tel dispositif de nettoyage 1 (plus particulièrement au coulisseau 5 que comporte un tel dispositif de nettoyage 1) et, d'autre part, un moteur d'entraînement de la chaîne.

Finalement, l'invention concerne, encore, un bâtiment de logement du bétail comportant, d'une part, un sol S comportant au moins une rainure R (plus particulièrement une pluralité de rainures R et/ou une rainure centrale Rc) et, d'autre part, une installation de nettoyage de ce sol S de ce bâtiment de logement de bétail.

Dans ce bâtiment, l'installation de nettoyage du sol S présente les caractéristiques décrites ci-dessus.

De plus, dans ce bâtiment, la chaîne du moyen d'entraînement en déplacement du dispositif de nettoyage 1 de cette installation de nettoyage est logée dans la rainure R ou dans l'une des rainures R (plus particulièrement dans la rainure centrale Rc) du sol S du bâtiment de logement du bétail.

## Revendications

1. Installation de nettoyage du sol (S) d'un bâtiment de logement du bétail, cette installation comportant, d'une part, au moins un dispositif de nettoyage (1) du sol (S) de ce bâtiment, un tel dispositif de nettoyage (1) comportant un ou plusieurs ensembles (2 ; 2') comportant, chacun, un racleur (3 ; 3') configuré pour prendre appui sur le sol (S) en vue de son raclage et, d'autre part, au moins un moyen d'entraînement en déplacement de ce ou de ces dispositifs de nettoyage (1) par rapport au sol (S), un tel moyen d'entraînement en déplacement comportant, d'une part, une chaîne, qui est configurée pour être logée dans une rainure (R) que comporte le sol (S), et qui est raccordée à un tel dispositif de nettoyage (1) et, d'autre part, un moteur d'entraînement de la chaîne, **caractérisée par le fait que** le ou les ensembles (2 ; 2') comportent, encore, chacun, d'une part, un balai (6 ; 6') configuré pour prendre appui sur le sol (S) en vue de son balayage, d'autre part, au moins un moyen de fixation (7) pour fixer le balai (6 ; 6') d'un tel ensemble (2 ; 2') sur le racleur (3 ; 3') d'un tel ensemble (2 ; 2') et, d'autre part encore, au moins un moyen de réglage (8) pour régler, selon une direction verticale, la position du balai (6 ; 6') d'un tel ensemble (2 ; 2') par rapport au racleur (3 ; 3') d'un tel ensemble (2 ; 2').

2. Installation de nettoyage du sol (S) selon la revendication 1, **caractérisée par le fait que** le ou les moyens de réglage (8) comportent, chacun, des moyens pour régler la position du balai (6 ; 6') d'un tel ensemble (2 ; 2') par rapport au racleur (3 ; 3') d'un tel ensemble (2 ; 2'), ceci selon une direction perpendiculaire à une surface de raclage (32), que présente un tel racleur (3 ; 3'), et qui est configurée pour prendre appui sur le sol (S) en vue de son raclage.

3. Installation de nettoyage du sol (S) selon l'une quelconque des revendications précédentes, **caractérisée par le fait que** le ou les moyens de fixation (7) comportent, chacun, d'une part, un support (70) équipant le racleur (3 ; 3'), d'autre part, une vis (71) coopérant avec un tel support (70) ainsi qu'avec le balai (6 ; 6').

4. Installation de nettoyage du sol (S) selon la revendication 3, **caractérisée par le fait que** le support (70) adopte la forme d'une patte de fixation, rendue solidaire du racleur (3 ; 3'), et comportant un orifice traversant traversé par la vis (71) du moyen de fixation (7).

5. Installation de nettoyage du sol (S) selon l'une quelconque des revendications 3 ou 4, **caractérisée par le fait que** le ou les moyens de fixation (7) comportent, encore chacun, au moins un orifice taraudé (72), que comporte le balai (6 ; 6'), et avec lequel ou lesquels coopèrent la ou les vis (71) du ou des moyens de fixation (7).

6. Installation de nettoyage du sol (S) selon les revendications 3 et 5, **caractérisée par le fait que** le ou les moyens de réglage (8) comportent, chacun, d'une part, la vis (71) du ou des moyens de fixation (7) qui est mobile en rotation par rapport au support (70) de ce ou ces moyens de fixation (7), d'autre part, l'orifice taraudé (72) que comporte le balai (6 ; 6') et qui coopère avec ladite vis (71) et, d'autre part encore, des moyens d'immobilisation (9) pour immobiliser en translation la vis (71) par rapport au support (70).

7. Installation de nettoyage du sol (S) selon la revendication 6, **caractérisée par le fait que** les moyens d'immobilisation en translation (9) comportent une paire d'écrous (90 ; 91) juxtaposés et vissés sur la tige filetée de la vis (71) et que le support (70) est interposé entre cette paire d'écrous (90 ; 91) et la tête de la vis (71).

8. Installation de nettoyage du sol (S) selon l'une quelconque des revendications 5 ou 6, **caractérisée par le fait que** le ou les ensembles (2 ; 2') comportent, encore, chacun, des moyens d'immobilisation en rotation de la vis (71) par rapport au support (70) et/ou au balai (6 ; 6'), de tels moyens d'immobilisation en rotation étant constitués par l'orifice taraudé (72), que comporte le balai (6 ; 6'), et qui coopère avec ladite vis (71).

9. Installation de nettoyage du sol (S) selon l'une quelconque des revendications précédentes, **caractérisée par le fait que** le balai (6 ; 6') du ou des ensembles (2 ; 2') comporte des poils réalisés en nylon et/ou regroupés par bouquets de poils et/ou présentant une longueur comprise entre 80mm et 120mm et/ou présentant un diamètre compris entre 1 et 1,4 millimètres.

10. Installation de nettoyage du sol (S) selon l'une quelconque des revendications précédentes, **caractérisée par le fait que** le balai (6 ; 6') du ou des ensembles (2 ; 2') comporte des poils dont la densité est comprise entre 130.000 et 200.000 poils par mètre carré et/ou que ces poils sont agencés par rangées de bouquets de poils, les bouquets de poils de deux rangées adjacentes de bouquets de poils étant agencés en quinconce.

11. Installation de nettoyage du sol (S) selon l'une quelconque des revendications précédentes, **caractérisée par le fait que** le balai (6 ; 6') comporte, d'une part, au moins une brosse (60) et, d'autre part, une glissière (61) recevant, intérieurement, ladite brosse (60) ou lesdites brosses (60).

12. Installation de nettoyage du sol (S) selon l'une quelconque des revendications précédentes, **caractérisée par le fait que** le ou les ensembles (2 ; 2') comportent, encore, chacun, une poutre (10) ainsi que des moyens de montage (11) pour monter le racleur (3 ; 3') d'un tel ensemble (2 ; 2') sur la poutre (10) d'un tel ensemble (2 ; 2'), ceci de manière mobile en pivotement et/ou en coulissement par rapport à la poutre (10).

13. Installation de nettoyage du sol (S) selon l'une quelconque des revendications précédentes, **caractérisée par le fait que** le ou les ensembles (2 ; 2'), chacun, d'une part, présentent une extrémité distale (12 ; 12'), d'autre part, comportent un volet (13 ; 13') monté en pivotement par rapport à l'extrémité distale (12 ; 12') d'un tel ensemble (2 ; 2'), et, d'autre part encore, comportent une balayette (14 ; 14') ainsi qu'au moins un moyen de fixation (15) pour fixer cette balayette (14 ; 14') sur ce volet (13 ; 13').

14. Bâtiment de logement du bétail comportant, d'une part, un sol (S) comportant au moins une rainure (R) et, d'autre part, une installation de nettoyage de ce sol (S) de ce bâtiment de logement de bétail, **caractérisé par le fait que** l'installation de nettoyage du sol (S) est conforme à l'une quelconque des revendications précédentes et que la chaîne du moyen d'entraînement en déplacement du dispositif de nettoyage (1) de cette installation de nettoyage est logée dans la rainure (R) ou dans l'une des rainures (R) du sol (S) du bâtiment de logement du bétail.

## Patentansprüche

1. Anlage zum Reinigen des Bodens (S) eines Gebäudes zur Unterbringung von Vieh, wobei diese Anlage einerseits mindestens eine Reinigungsvorrichtung (1) für den Boden (S) dieses Gebäudes umfasst, wobei eine derartige Reinigungsvorrichtung (1) eine oder mehrere Anordnungen (2; 2') umfasst, die jeweils einen Abstreifer (3; 3') umfassen, der so konfiguriert ist, dass er auf dem Boden (S) aufliegt, um ihn abzustreifen, und andererseits mindestens ein Antriebsmittel zum Verschieben dieser Reinigungsvorrichtung(en) (1) relativ zum Boden (S), wobei ein derartiges Antriebsmittel zum Verschieben einerseits eine Kette umfasst, die dazu konfiguriert ist, in einer im Boden (S) enthaltenen Nut (R) aufgenommen zu werden, und die mit einer derartigen Reinigungsvorrichtung (1) verbunden ist, und andererseits einen Antriebsmotor für die Kette, **dadurch gekennzeichnet, dass** die Anordnung(en) (2; 2') ferner jeweils einerseits eine Bürste (6; 6') umfasst/umfassen, die so konfiguriert ist, dass sie auf dem Boden (S) aufliegt, um ihn zu kehren, andererseits mindestens ein Befestigungsmittel (7) zum Befestigen der Bürste (6; 6') einer derartigen Anordnung (2; 2') am Abstreifer (3; 3') einer derartigen Anordnung (2; 2'), und ferner, andererseits, mindestens ein Einstellmittel (8) zum Einstellen, in vertikaler Richtung, der Position der Bürste (6; 6') einer derartigen Anordnung (2; 2') relativ zum Abstreifer (3; 3') einer derartigen Anordnung (2; 2').

2. Anlage zum Reinigen des Bodens (S) nach Anspruch 1, **dadurch gekennzeichnet, dass** das oder die Einstellmittel (8) jeweils Mittel zum Einstellen der Position der Bürste (6; 6') einer derartigen Anordnung (2; 2') relativ zum Abstreifer (3; 3') einer derartigen Anordnung (2; 2') umfassen, und zwar in einer Richtung senkrecht zu einer Abstreiffläche (32), die ein derartiger Abstreifer (3; 3') aufweist, und die so konfiguriert ist, dass sie auf dem Boden (S) aufliegt, um ihn abzustreifen.

3. Anlage zum Reinigen des Bodens (S) nach einem der vorhergehenden Ansprüche, **dadurch gekennzeichnet, dass** das oder die Befestigungsmittel (7) jeweils einerseits einen am Abstreifer (3; 3') angebrachten Träger (70) und andererseits eine Schraube (71) umfassen, die mit einem derartigen Träger (70) sowie mit der Bürste (6; 6') zusammenwirkt.

4. Anlage zum Reinigen des Bodens (S) nach Anspruch 3, **dadurch gekennzeichnet, dass** der Träger (70) die Form einer Befestigungslasche aufweist, die fest am Abstreifer (3; 3') befestigt ist und eine Durchgangsöffnung umfasst, durch die die Schraube (71) des Befestigungsmittels (7) hindurchgeht.

5. Anlage zum Reinigen des Bodens (S) nach einem der Ansprüche 3 oder 4, **dadurch gekennzeichnet, dass** das oder die Befestigungsmittel (7) jeweils ferner mindestens eine Gewindeöffnung (72) umfassen, die von der Bürste (6; 6') umfasst ist, und mit dem oder denen die Schraube oder die Schrauben (71) der Befestigungsmittel (7) zusammenwirken.

6. Anlage zum Reinigen des Bodens (S) nach den Ansprüchen 3 und 5, **dadurch gekennzeichnet, dass** das oder die Einstellmittel (8) jeweils einerseits die Schraube (71) des oder der drehbaren Befestigungsmittel(s) (7) umfassen, die relativ zum Träger (70) dieses oder dieser Befestigungsmittel (7) drehbar ist, andererseits die Gewindeöffnung (72), die von der Bürste (6; 6') umfasst ist und die mit der Schraube (71) zusammenwirkt, und ferner, andererseits, Blockiermittel (9) zum Blockieren einer Translationsbewegung der Schraube (71) relativ zum Träger (70).

7. Anlage zum Reinigen des Bodens (S) nach Anspruch 6, **dadurch gekennzeichnet, dass** die Mittel zum Blockieren der Translationsbewegung (9) ein Paar Muttern (90; 91) umfassen, die nacheinander angeordnet und auf die Gewindestange der Schraube (71) geschraubt sind und der Träger (70) zwischen diesem Paar Muttern (90; 91) und dem Kopf der Schraube (71) angeordnet ist.

8. Anlage zum Reinigen des Bodens (S) nach einem der Ansprüche 5 oder 6, **dadurch gekennzeichnet, dass** die Anordnung(en) (2; 2') ferner jeweils Mittel zum Blockieren der Drehung (71) der Schraube relativ zum Träger (70) und/oder zur Bürste (6; 6') umfassen, wobei diese Mittel zum Blockieren der Drehung aus der Gewindeöffnung (72) bestehen, die von der Bürste (6; 6') umfasst ist und die mit der Schraube (71) zusammenwirkt.

9. Anlage zum Reinigen des Bodens (S) nach einem der vorhergehenden Ansprüche, **dadurch gekennzeichnet, dass** die Bürste (6; 6') der Anordnung(en) (2; 2') Borsten aufweist, die aus Nylon hergestellt und/oder in Borstenbüscheln gruppiert sind und/oder eine Länge zwischen 80 mm und 120 mm und/oder einen Durchmesser zwischen 1 und 1,4 mm aufweisen.

10. Anlage zum Reinigen des Bodens (S) nach einem der vorhergehenden Ansprüche, **dadurch gekennzeichnet, dass** die Bürste (6; 6') der Anordnung(en) (2; 2') Borsten umfasst, deren Dichte zwischen 130.000 und 200.000 Borsten pro Quadratmeter liegt und/oder dass diese Borsten in Reihen von Borstenbüscheln angeordnet sind, wobei die Borstenbüschel zweier benachbarter Reihen von Borstenbüscheln versetzt angeordnet sind.

11. Anlage zum Reinigen des Bodens (S) nach einem der vorhergehenden Ansprüche, **dadurch gekennzeichnet, dass** der Bürste (6; 6') einerseits mindestens eine Bürste (60) und andererseits einen Schlitten (61) umfasst, der im Inneren die Bürste (60) oder die Bürsten (60) aufnimmt.

12. Anlage zum Reinigen des Bodens (S) nach einem der vorhergehenden Ansprüche, **dadurch gekennzeichnet, dass** die Anordnung(en) (2; 2') ferner jeweils einen Balken (10) sowie Montagemittel (11) zum Montieren des Abstreifers (3; 3') einer derartigen Anordnung (2; 2') an dem Balken (10) einer derartigen Anordnung (2; 2') umfassen; und zwar auf eine relativ zu dem Balken (10) schwenkbare und/oder verschiebbare Weise.

13. Anlage zum Reinigen des Bodens (S) nach einem der vorhergehenden Ansprüche, **dadurch gekennzeichnet, dass** die Anordnung(en) (2; 2') jeweils einerseits ein distales Ende (12; 12') aufweisen, andererseits eine relativ zum distalen Ende (12; 12') einer derartigen Anordnung (2; 2') schwenkbar montierte Klappe (13; 13') umfassen, und ferner, andererseits, einen Besen (14; 14') sowie mindestens ein Befestigungsmittel (15) zum Befestigen dieses Besens (14; 14') an dieser Klappe (13; 13') umfassen.

14. Gebäude zur Unterbringung von Vieh, umfassend einerseits einen mindestens eine Nut (R) umfassenden Boden (S) und andererseits eine Anlage zum Reinigen des Bodens (S) dieses Gebäudes zur Unterbringung von Vieh, **dadurch gekennzeichnet, dass** die Anlage zum Reinigen des Bodens (S) einem der vorhergehenden Ansprüche entspricht und dass die Kette des Antriebsmittels zum Verschieben der Reinigungsvorrichtung (1) dieser Reinigungsanlage in der Nut (R) oder in einer der Nuten (R) des Bodens (S) des Gebäudes zur Unterbringung von Vieh untergebracht ist.

## Claims

1. Apparatus for cleaning the floor (S) of a building for housing livestock, this apparatus comprising at least one device (1) for cleaning the floor (S) of this building, such a cleaning device (1) comprising one or more assemblies (2; 2'), which each comprise a scraper (3; 3') designed to rest on the ground (S) for the scraping thereof, and said apparatus also comprising at least one means for moving this or these cleaning devices (1) with respect to the ground (S), such a movement means comprising a chain, which is designed to be housed in a groove (R) in the floor (S), and which is connected to such a cleaning device (1), and said movement means also comprising a motor for driving the chain, **characterized in that** the assembly or assemblies (2; 2') further comprises or each further comprise a broom (6; 6') designed to rest on the ground (S) for the sweeping thereof, at least one means (7) for securing the broom (6; 6') of such an assembly (2; 2') to the scraper (3; 3') of such an assembly (2; 2'), and at least one adjustment means (8) for adjusting, in a vertical direction, the position of the broom (6; 6') of such an assembly (2; 2') relative to the scraper (3; 3') of such an assembly (2; 2').

2. Apparatus for cleaning the floor (S) according to claim 1, **characterized in that** the adjustment means (8) comprises or each comprise means for adjusting the position of the broom (6; 6') of such an assembly (2; 2') with respect to the scraper (3; 3') of such an assembly (2; 2') in a direction perpendicular to a scraping surface (32) of such a scraper (3; 3'), which surface is designed to rest on the ground (S) for the scraping thereof.

3. Apparatus for cleaning the floor (S) according to either of the preceding claims, **characterized in that** the securing means (7) comprises or each comprise a support (70) provided on the scraper (3; 3'), and a screw (71) interacting with such a support (70) as well as with the broom (6; 6').

4. Apparatus for cleaning the floor (S) according to claim 3, **characterized in that** the support (70) is in the form of a securing lug, which is secured to the scraper (3; 3') and comprises a through opening through which the screw (71) of the securing means (7) passes.

5. Apparatus for cleaning the floor (S) according to either claim 3 or claim 4, **characterized in that** the securing means (7) further comprises or each comprise at least one threaded opening (72) in the broom (6; 6'), with which opening the screw or screws (71) of the fastening means (7) interact(s).

6. Apparatus for cleaning the floor (S) according to claims 3 and 5, **characterized in that** the adjustment means (8) comprises or each comprise the screw (71) of the securing means (7), which is rotatable relative to the support (70) of this or these securing means (7), the threaded opening (72) in the broom (6; 6'), which opening interacts with said screw (71), and prevention means (9) for preventing the screw (71) from translating relative to the support (70).

7. Apparatus for cleaning the floor (S) according to claim 6, **characterized in that** the translation prevention means (9) comprise a pair of nuts (90; 91) placed side by side and screwed onto the threaded rod of the screw (71), and **in that** the support (70) is inserted between this pair of nuts (90; 91) and the head of the screw (71).

8. Apparatus for cleaning the floor (S) according to either claim 5 or claim 6, **characterized in that** the assembly or assemblies (2; 2') further comprises or each further comprise means for preventing the screw (71) from rotating with respect to the support (70) and/or with respect to the broom (6; 6'), such rotation prevention means being formed by the threaded opening (72) in the broom (6; 6'), which opening interacts with said screw (71).

9. Apparatus for cleaning the floor (S) according to any of the preceding claims, **characterized in that** the broom (6; 6') of the assembly or assemblies (2; 2') comprises bristles made of nylon and/or grouped in bundles of bristles and/or having a length between 80 mm and 120 mm and/or having a diameter between 1 and 1.4 millimeters.

10. Apparatus for cleaning the floor (S) according to any of the preceding claims, **characterized in that** the broom (6; 6') of the assembly or assemblies (2; 2') comprises bristles of which density is between 130,000 and 200,000 bristles per square meter and/or **in that** these bristles are arranged in rows of bundles of bristles, the bundles of bristles of two adjacent rows of bundles of bristles being arranged in staggered rows.

11. Apparatus for cleaning the floor (S) according to any of the preceding claims, **characterized in that** the broom (6; 6') comprises at least one brush (60) and also comprises a slide (61) which accommodates, on the inside, said brush (60) or said brushes (60).

12. Apparatus for cleaning the floor (S) according to any of the preceding claims, **characterized in that** the assembly or assemblies (2; 2') further comprises or each further comprise a beam (10) as well as mounting means (11) for mounting the scraper (3; 3') of such an assembly (2; 2') on the beam (10) of such an assembly (2; 2') so as to be able to pivot and/or slide relative to the beam (10).

13. Apparatus for cleaning the floor (S) according to any of the preceding claims, **characterized in that** the assembly or assemblies (2; 2') has or each have a distal end (12; 12') and comprises or each comprise a flap (13; 13') pivotally mounted with respect to the distal end (12; 12') of such an assembly (2; 2'), and a small brush (14; 14') as well as at least one securing means (15) for securing this small brush (14; 14') to this flap (13; 13').

14. Building for housing livestock, comprising a floor (S) that comprises at least one groove (R), and comprising an apparatus for cleaning this floor (S) of this building for housing livestock, **characterized in that** the apparatus for cleaning the floor (S) is in accordance with any of the preceding claims and **in that** the chain of the means for moving the cleaning device (1) of this cleaning apparatus is housed in the groove (R) or in one of the grooves (R) of the floor (S) of the building for housing livestock.
